# EUROPEAN PATENT APPLICATION

(11) **EP 4 823 030 A1**
(43) Date of publication of application: **14.10.2026**
(21) Application number: 25168812.3
(22) Date of filing: 07.04.2025
(51) Int. Cl.: H04L 9/00, H04L 9/32, G06F 21/44, G06F 21/60, H04L 12/46, G06F 21/42, H04L 9/40, G06F 3/00

(54) **SECURE DELIVERY METHOD**

(71) Applicant: Greip IP Solutions Oy, 00100 Helsinki (FI)
(72) Inventor: AALTONEN, Aleksanteri, 02700 Kauniainen (FI)
(74) Representative: Berggren Oy

(57) **Abstract**

Methods, an apparatus, and a computer program product are disclosed. A method comprises: establishing a secure connection to a server, wherein establishing the secure connection is dependent on authentication of a user; receiving a message transmitted via at least one further connection different from the secure connection, the message comprising one or more content identifiers and a cryptographic signature; verifying the cryptographic signature to confirm that the message originated from the server; sending, using the secure connection, a request for content to the server, the request comprising at least one of the one or more content identifiers; receiving, using the secure connection, content corresponding to the at least one content identifier from the server; and causing a user interface to output one or more content items based on the received content.

## Description

### Technical Field

The present solution generally relates to methods, an apparatus, and a computer program product for secure delivery.

### Background

Various online systems are configured to process confidential data. These systems may send notification messages to notify users of new content or events within the system. The information in these notifications is ultimately transmitted over the network, in plain text in some cases, leading to possible information disclosure which is why the content of such messages is often redacted. Further, there are security concerns with links received via e.g. email or text messages, as such messages may be sent by impostors, and the links may lead to fraudulent websites. The security constraints related to these notifications make accessing the online systems and the information stored in them troublesome for the users, and cause the users to be less informed about recent events within the systems.

### Summary of the Invention

The scope of protection sought for various embodiments of the invention is set out by the independent claims. Various embodiments are disclosed in the dependent claims. The embodiments and features, if any, described in this specification that do not fall under the scope of the independent claims are to be interpreted as examples useful for understanding various embodiments of the invention.

A first computer-implemented method comprises: establishing a secure connection to a server, wherein establishing the secure connection is dependent on authentication of a user; receiving a message transmitted via at least one further connection different from the secure connection, the message comprising one or more content identifiers and a cryptographic signature; verifying the cryptographic signature to confirm that the message originated from the server; sending, using the secure connection, a request for content to the server, the request comprising at least one of the one or more content identifiers; receiving, using the secure connection, content corresponding to the at least one content identifier from the server; and causing a user interface to output one or more content items based on the received content.

An apparatus comprises means for performing the first method.

The means may comprise one or more processors, one or more memories including computer program code, the one or more memories and the computer program code configured to, with the one or more processors, cause the apparatus to perform the first method.

A computer program product comprises computer program code configured to, when executed by one or more processors, cause an apparatus to perform the first method.

Verifying the cryptographic signature may be dependent on the authentication of the user.

The one or more content identifiers may comprise at least one universal resource locator, URL, pointing to a resource not associated with the server, and the first method may comprise: excluding the at least one URL from the request for content; and causing the user interface to output the at least one URL.

The user interface may be configured to output the received message, and the first method may comprise: causing the user interface to output the one or more content items separately from the received message.

The first method may comprise receiving one or more user inputs, and sending the one or more user inputs to the server using the secure connection.

A second computer-implemented method comprises: establishing a secure connection to a client device, wherein establishing the secure connection is dependent on authentication of a user at the client device; generating a message comprising one or more content identifiers and a cryptographic signature; sending the message to the client device using at least one further connection different from the secure connection; receiving, using the secure connection, a request for content from the client device, the request comprising at least one of the one or more content identifiers; retrieving content associated with the at least one content identifier from one or more memories; and sending the content to the client device using the secure connection.

An apparatus comprises means for performing the second method.

The means may comprise one or more processors, one or more memories including computer program code, the one or more memories and the computer program code configured to, with the one or more processors, cause the apparatus to perform the second method.

A computer program product comprises computer program code configured to, when executed by one or more processors, cause an apparatus to perform the second method.

The second method may comprise: storing, in the one or more memories, an association between the user and the one or more content identifiers sent to the client device; and verifying the request for content by comparing the user of the secure connection and the at least one content identifier in the request for content to the stored association.

The message may comprise a body, and the second method may comprise: generating the message such that the body of the message is devoid of uniform resource locators, URLs.

The second method may comprise: querying the one or more memories for configurations associated with the user; if one or more configurations associated with the user are found and indicate that: the user has a known ability to establish the secure connection, and/or a URL exclusion override is applicable to the user, generating the message such that the body of the message is devoid of URLs; or otherwise, allowing URLs in the body of the message.

The second method may comprise: in response to establishing the secure connection, storing, in the one or more memories, a configuration which indicates that the user has a known ability to establish the secure connection.

The second method may comprise receiving one or more user inputs from the client device using the secure connection, and storing the one or more user inputs in the one or more memories.

The cryptographic signature may comprise the one or more content identifiers in encrypted form.

The message may be an email, a text message, a multimedia message, or an instant message.

The message may comprise one or more headers, and the one or more content identifiers and the cryptographic signature may be included in the one or more headers of the message.

The one or more content identifiers may comprise one or more uniform resource locators, URLs, pointing to one or more resources associated with the server.

A system comprises a server comprising means for performing the first method, and one or more client devices comprising means for performing the second method.

### Brief Description of the Drawings

FIG. 1 illustrates embodiments of a system;
FIG. 2 is a schematic diagram depicting embodiments of an apparatus;
FIG. 3 is a flow chart illustrating an embodiment of a method;
FIG. 4 is a flow chart illustrating an embodiment of a method;
FIG. 5 is a sequence diagram illustrating embodiments of the methods; and
FIG. 6 depicts an example user interface.

### Detailed Description of the Invention

The following description and drawings are illustrative and are not to be construed as unnecessarily limiting. The specific details are provided for a thorough understanding of the disclosure. However, in certain instances, well-known or conventional details are not described in order to avoid obscuring the description. In this specification, reference to "one embodiment" or "an embodiment" means that a particular feature, structure, or characteristic described in connection with the embodiment is included in at least one embodiment of the disclosure. References to an embodiment can be, but are not necessarily, references to the same embodiment in the present disclosure.

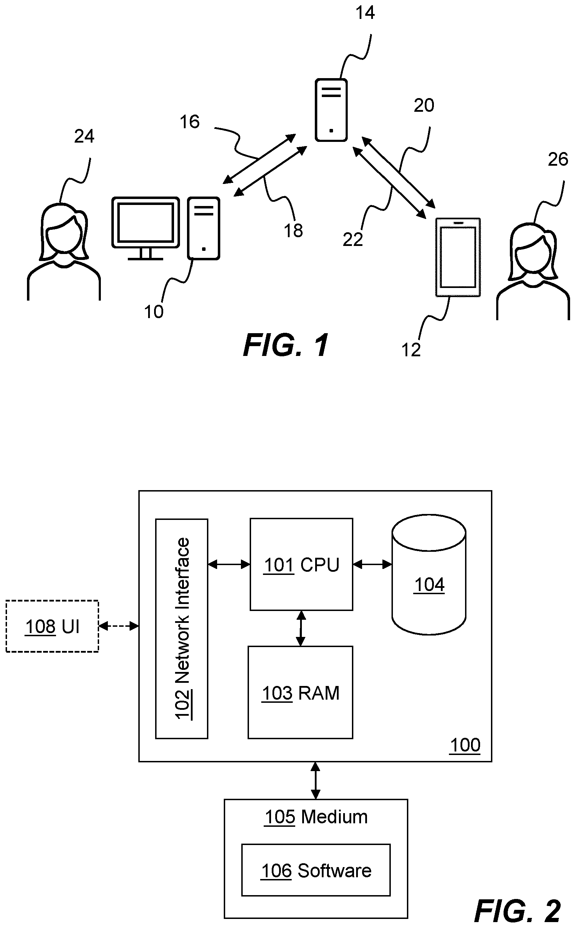

FIG. 1 illustrates an example scenario and system for secure communication, or more specifically, secure delivery of content. As will be described in more detail throughout this specification, the content may include hyperlinks, text, and/or other types media, for example. The system comprises user devices 10, 12, and a server 14. The user devices 10, 12 are computing devices, and the server is another computing device that is configured to communicate with the user devices via respective connections 16, 18, 20, 22. The user devices may be personal computers, mobile devices, such as smartphones, tablet computers, laptops, smart watches, or other mobile computing devices. In the example shown in FIG. 1, user device 10 is a personal computer, and user device 12 is a smartphone. Throughout this specification, "user device" and "client device" are used interchangeably.

The server 14 may host an online system configured to store information and/or content, including confidential content. Users 24, 26 of the user devices may wish to securely receive (confidential) content from the server 14 to their respective user devices 10, 12. The users 24, 26 may or may not know whether (new) confidential content is available for them on the server 14 without explicit notification from the server 14. As an example, the first user 24 may wish to send the second user 26 a confidential message via the server 14, or the second user 26 may wish to send the first user 24 a document containing confidential information via the server 14. When events occur within the online system, the server 14 may be configured to send out notifications (e.g. via email) to the users 10, 12 that the events relate to or that are configured to receive such alerts for various reasons, e.g. through their configured role. Such events may include a new message being sent to a user, a new or changed document being available for the user, or a triggered reminder of an upcoming deadline that requires actions form the user, for example.

At least two connections are provided for communication between the server 14 and each user device 10, 12 via one or more networks. The connections may include various sub-connections and/or intermediate entities relaying information from one another to achieve a connection between the server and the respective user device.

A first connection 16, 20 is non-secure, or at least less secure than a second connection 18, 22. The first connection may be at least partially unsecure, and/or the first connection may be at least partially unencrypted. The first connection may be one where sender authentication is not possible. In general, the first connection may be established over one or more unsecure and/or open networks. In such networks, it is often not possible to establish the identity of message senders and/or recipients.

The first connection may be configured and/or used for sending and receiving messages such as text messages, multimedia messages, emails, and/or instant messages, for example. Text messages may be sent by the server via the Short Message Service (SMS). Multimedia messages may be sent by the server via the Multimedia Messaging Service (MMS). Emails may be sent by the server using various email agents, servers, and/or protocols such as the Simple Mail Transfer Protocol (SMTP) for exchanging messages, and/or Post Office Protocol 3 (POP3) servers and/or Internet Message Access Protocol (IMAP) servers. Instant messages may be sent by the server over a network such as the Internet.

The second connection is secure, or at least more secure than the first connection. Preferably, the second connection is encrypted. For example, the second connection may be a secure SSL layered HTTP connection with user authentication. While the first connections have security drawbacks, they provide savings in terms of processing and memory costs as well as usability from the perspective of the users 24, 26. The second connections are used to compensate for the security drawbacks of the first connections.

For completeness, it is contemplated that the first connection may alternatively be as secure or more secure than the second connection. This may be sufficient if the second connection meets a security threshold, such as being (end-to-end) encrypted. The security level of the first connection may thus be irrelevant and it may be more, less, or equally secure in comparison with the second connection. However, at present less secure connections via e.g. email or text messages are more commonly available and thus preferable for the first connection for their convenience to the user.

The connections of FIG. 1 are shown as two-way connections, but some of them may be implemented as one-way connections. For example, the first connections 16, 20 may be one-way connections wherein the server is configured to send and the user device is configured to receive messages using the connection. However, in general, two-way connections such as HTTP connections may be more commonly used.

FIG. 2 is a schematic diagram depicting embodiments of an apparatus. The apparatus 100 may be a general-purpose computer, such as the server 14 of FIG. 1. Alternatively, the user devices 10, 12 may be implemented as the apparatus of FIG. 1. The apparatus 100 may include one or more processors, such as a central processing unit (CPU) 101 and/or a graphics processing unit (GPU). The apparatus 100 may include one or more memories 103, 104, such as a random access memory (RAM) 103, and/or non-volatile memory 104, which may store one or more databases. The apparatus may be but need not be dedicated hardware. The apparatus may be a virtual machine. The method(s), described in more detail below, may be executed as a containerized application using operating system (OS) -level virtualization.

The apparatus 100 may comprise a network interface 102 for communicating with other devices via a network. The apparatus 100 may be located in a data center and accessible via the network through the network interface 102, especially when the apparatus is the server 14 of FIG. 1. The network interface may comprise one or more network interfaces, such as a cellular network interface, an Internet of Things (IOT) network interface, a personal area network (PAN) interface, and other suitable network interfaces. Referring now to the connections shown in FIG. 1, the network interface of the apparatus of FIG. 2 may be configured to establish the relevant connections shown in FIG. 1, and to send/receive messages using the established connection(s). For example, when the apparatus is the server 14 of FIG. 1, the network interface may establish the connections 16, 18, 20, 22, send messages via the connections 16, 18, 20, 22, and receive messages via the second connections 18, 22. When the apparatus is the user device 10 of FIG. 1, the network interface may establish the connections 16, 18, send messages via the second connection 18, and receive messages via both connections 16, 18. When the apparatus is the user device 12 of FIG. 1, the network interface may establish the connections 20, 22, send messages via the second connection 22, and receive messages via both connections 20, 22.

Referring again to FIG. 2, the apparatus 100 may comprise or be coupled to a user interface (UI) 108. When the apparatus 100 is the server 14 of FIG. 1, the user interface may be omitted. When the apparatus 100 is a user device 10, 12 of FIG. 1, the user interface is included in the apparatus or coupled to the apparatus. The user interface 108 may comprise e.g., a display, a touchscreen, a speaker, a haptic output device, and/or other input and/or output devices. In the user device 10 of FIG. 1, the user interface comprises e.g. a display coupled to the personal computer. In the user device 12 of FIG. 1, the user interface comprises e.g. a touchscreen of the smartphone.

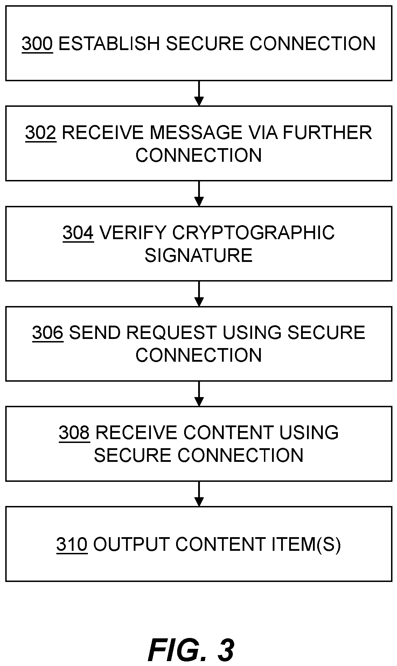

FIG. 3 is a flow chart depicting an embodiment of a (computer-implemented) method for secure communication. The method of FIG. 3 may be performed by the user device(s) 10, 12 of FIG. 1. The method comprises establishing 300 a secure connection to a server, wherein establishing the secure connection is dependent on authentication of a user; receiving 302 a message transmitted via at least one further connection different from the secure connection, the message comprising one or more content identifiers and a cryptographic signature; verifying 304 the cryptographic signature to confirm that the message originated from the server; sending 306, using the secure connection, a request for content to the server, the request comprising at least one of the one or more content identifiers; receiving 308, using the secure connection, content corresponding to the at least one content identifier from the server; and causing a user interface to output 310 one or more content items based on the received content.

It is noted that the order of the above-mentioned method steps may vary. For example, the secure connection may be established before, after, or in between receiving the message and verifying the cryptographic signature, depending on the specific implementation.

The apparatus 100 of FIG. 2 may be configured to perform the method of FIG. 3 or any of its embodiments. The apparatus 100 may comprise means for performing the method of FIG. 3 or any of its embodiments. The means may comprise one or more processors 101, one or more memories 103, 104 including computer program code, the one or more memories 103,104 and the computer program code configured to, with the one or more processors 101, cause the apparatus 100 to perform the method of FIG. 3 or any of its embodiments. As mentioned above, the apparatus 100 may be the user device 10, 12 of FIG. 1.

Referring again to FIG. 2, a computer program product or a computer-readable medium 105 comprises computer program code 106 configured to, when executed by one or more processors 101, cause an apparatus 100 or a system to perform the method of FIG. 3 or any of its embodiments. In an embodiment, the computer-readable medium is a non-transitory computer-readable medium.

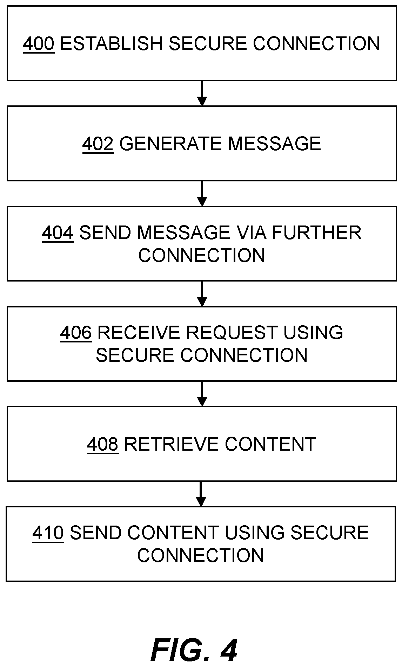

FIG. 4 is a flow chart depicting an embodiment of a (computer-implemented) method for secure communication. The method of FIG. 4 may be performed by the server 14 of FIG. 1. The method comprises establishing 400 a secure connection to a client device, wherein establishing the secure connection is dependent on authentication of a user at the client device; generating 402 a message comprising one or more content identifiers and a cryptographic signature; sending 404 the message to the client device using at least one further connection different from the secure connection; receiving 406, using the secure connection, a request for content from the client device, the request comprising at least one of the one or more content identifiers; retrieving 408 content associated with the at least one content identifier from one or more memories; and sending 410 the content to the client device using the secure connection.

Again, it is noted that the order of the above-mentioned method steps may vary. For example, the secure connection may be established before, after, or in between generating and sending the message, depending on the specific implementation.

Technical effects of the above methods include allowing users to quickly and securely receive information related to events from an online system. They allow for delivering dynamic notifications and links to users, addressing the issues of information disclosure and sender authentication. They ensure that users can safely interact with the content and links provided in their messages, such as e-mails, enhancing the overall security and usability of the online system.

The apparatus 100 of FIG. 2 may be configured to perform the method of FIG. 4 or any of its embodiments. The apparatus 100 may comprise means for performing the method of FIG. 4 or any of its embodiments. The means may comprise one or more processors 101, one or more memories 103, 104 including computer program code, the one or more memories 103,104 and the computer program code configured to, with the one or more processors 101, cause the apparatus 100 to perform the method of FIG. 4 or any of its embodiments. As mentioned above, the apparatus 100 may be the server 14 of FIG. 1.

Referring again to FIG. 2, a computer program product or a computer-readable medium 105 comprises computer program code 106 configured to, when executed by one or more processors 101, cause an apparatus 100 or a system to perform the method of FIG. 4 or any of its embodiments. In an embodiment, the computer-readable medium is a non-transitory computer-readable medium.

While this disclosure is presented from the point of view of a single apparatus performing each method and acting as a server/user device as shown in FIG. 1, the apparatuses may be implemented as distributed apparatuses or systems including a plurality of devices in communication with each other. For example, the server 14 of FIG. 1 may be implemented as a distributed apparatus comprising a plurality of apparatuses e.g. according to FIG. 2. This distributed apparatus may be configured to perform the method of FIG. 4. Alternatively, or additionally, components of the apparatus shown in FIG. 2 may be distributed to several devices in communication with each other. For example, one or more of the memories or processors of the server may be distributed e.g. in a cloud computing system. Especially the memory or memories configured to store content may require a large amount of storage space and may thus be external but accessible to the server device itself.

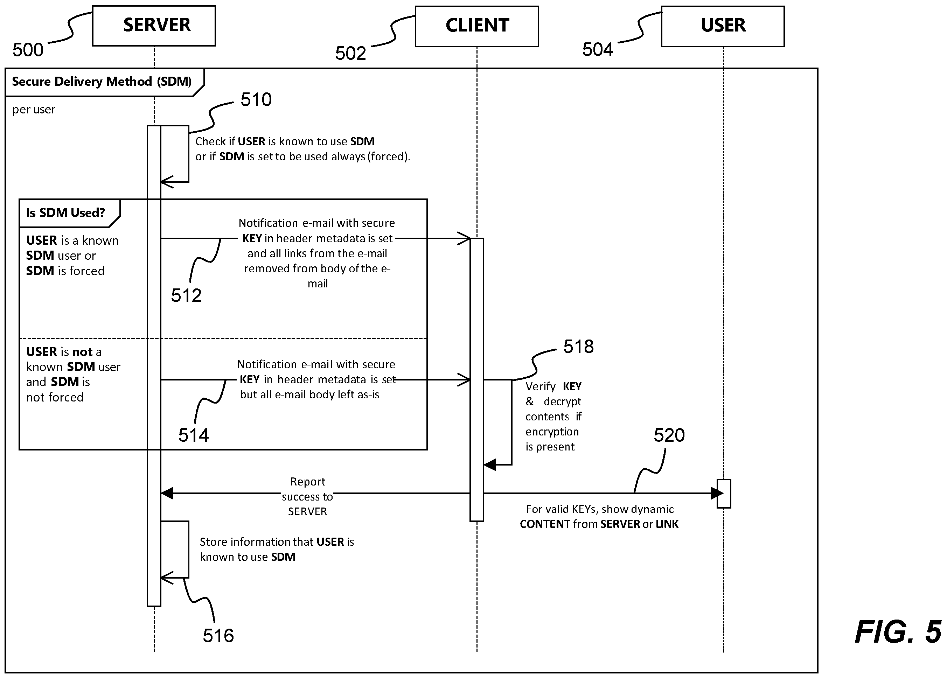

Embodiments of the methods of FIG. 3 and FIG. 4 are now discussed in more detail with reference to a sequence diagram of a secure delivery method shown in FIG. 5. The diagram of FIG. 5 shows actions performed by a server 500, a client 502, and a user 504. The server 500 may correspond to the server 14 of FIG. 1, the client 502 to one of the user devices 10, 12 of FIG. 1, and the user 504 to the respective user 24, 26 of the user device 10, 12 of FIG. 1. The server 500 may comprise an application and a database configured to store content. The client 502 may be e.g. an e-mail client of the user 504, or an e-mail client add-in installed within the e-mail client of the user 504.

As shown in FIG. 5, the server may check 510 if the user is known to the secure delivery method, and/or if the secure delivery method is set to be always used, i.e. forced. The server may query (its) one or more memories or database(s) for configurations associated with the user. If the server 500 finds configuration(s) associated with the user, the server checks whether the configurations indicate that the user has a known ability to establish the secure connection - i.e. is a known user. Alternatively, or additionally, the server checks whether an exclusion, such as an universal resource locator (URL) exclusion, is applicable to the user. Such an exclusion may be applicable to the specific user 504, all users belonging to a specific group, or even all known and/or unknown users of the method. The exclusion applies a blanket rule for all users it is applicable to, even if they have not previously used the secure delivery method, and/or if their ability to use the secure delivery method is not known.

For completeness, it is noted that the server may alternatively check for only one of the above-mentioned criteria, or neither of the two criteria. In these cases, steps specifically related to the omitted criterion/criteria are omitted.

If either criterion or both criteria are met, i.e. the user is known and/or the exclusion applies to the user, the server generates 512 a message such that the body of the message is devoid of links or URLs. In the specific scenario shown in FIG. 5, the message is an email. The message contains a header and a body. The message header comprises a secure key, which contains one or more content identifiers and a cryptographic signature. Preferably, the one or more content identifiers are encrypted within the cryptographic signature. The body of the email may contain a (non-confidential) message to the user to notify the user of content available on the server. As mentioned above, the body does not contain any links or URLs. The server may first generate a message body that contains links or URLs, and then proceed to remove them, or the server may directly generate the message without URLs or links. The server may generate the message in the above-described manner when the above-mentioned criteria are met. Alternatively, or additionally, the server may be configured to generate the message without any URLs by default, without having to check for configurations related to the user.

It is typically not fully possible to authenticate e.g. e-mail or text message senders, which leads to inherent user and information technology (IT) organization mistrust to any links in the e-mails or text messages. Some organizations like banks may adopt an approach of not sending any links in the first place to train users not to click on any. When users are aware of such a policy, they will trust messages that do not contain any links or URLs more than messages that do contain links or URLs.

The above omission of links or URLs may lead to a "first message problem" wherein the user is not able to access the online system if they never receive a link for e.g. installing the client 502 in the first place. The above-mentioned "known user" criterion may be used to account for this. If neither criteria are met, i.e. the user 504 is not known and the exclusion does not apply to the user, the server 500 generates 514 the message in the manner described above, but allows links or URLs in the body of the message. Alternatively, or additionally, the server may be configured to generate the message in this manner by default, without having to check for configurations related to the user.

As shown in FIG. 5, the server may store 516 information that the user 504 is known to use the secure delivery method. The server may store a configuration which indicates that the user has a known ability to establish the secure connection e.g. in response to establishing the secure connection, or in response to a (verified) content request from the client 500, which are described in more detail below. By transmitting and/or storing information on whether the user has successfully used the secure delivery methodology, the server 500 can support both users 504 who have the client 502 installed and those who do not have it. This solves the "first message" problem by allowing the users to view the first message with the necessary links for accessing the system in all cases. Alternatively, for higher security, an organization can decide that even the first message is sent in a way that links are only available if the client 500 is installed and properly configured by using the URL exclusion described above.

The server 500 sends the generated message to the client 502. The message may be sent using a less secure or non-secure connection, since it only contains non-confidential information in unencrypted form and preferably does not contain any links that may raise the suspicions of the user. The client 502 then receives the message from the server 500. While the message shown in FIG. 5 is an email, possible alternatives include e.g. a text message, a multimedia message, or an instant message. Referring now to the corresponding entities of FIG. 1, the server 14 may send the message to e.g. user device 10 using first (non-secure) connection 16, and the user device 10 receives the message via the first connection 16. As another example, the server 14 may send the message to user device 12 using the first (non-secure) connection 20, and the user device 12 receives the message via the first connection 20.

Referring now to both FIG. 1 and FIG. 5, the server 14, 500 may store an association between the user 24, 26, 504 and the one or more content identifiers sent to the client 502 e.g. for use in a later verification step.

As shown in FIG. 5, The client 502 verifies 518 the received key, or more specifically, the received cryptographic signature, to confirm that the message originated from the server. The client may verify the signature using a (public) key available to the client 502. This may be performed using public-key cryptography or a public-key infrastructure (PKI). If the signature contains the one or more content identifiers in encrypted form, the client 502 decrypts the key/signature (e.g. using a decryption key) to obtain the one or more content identifier in unencrypted form.

Verifying the key/signature may be dependent on authentication of the user 504 at the client 502. For example, the key may only be accessible to the client 502 if the user 504 is successfully authenticated or signed in at the client 502. This provides additional security.

The client 502 and the server 500 establish a secure connection between each other for transmission of content from the server to the client. The client may initiate the secure connection in response to receiving the message and/or verifying the cryptographic signature. The secure connection is dependent on authentication of the user 504 at the client 502. This provides additional security.

Various techniques are available for user authentication. Techniques such as passwords, PIN codes, two-factor authentication, multi-factor authentication, etc. may be employed for the user authentication. For example, the client 504 may require that the user authenticates himself or signs in to the client 504 in order to establish the secure connection. The above-mentioned PKI or public-key cryptography may be applied for user authentication e.g. using a client certificate. Such a certificate may be stored by the client 502 and/or e.g. on a smart card of the user 504. Optionally, a server certificate may be used. As an example, the user authentication may be performed as part of establishing the secure connection, such as the secure SSL layered HTTP connection with user authentication.

With the established secure connection, the client 502 sends the server a request for content using at least one of the one or more content identifiers received from the server. The request may be e.g. a HTTPS GET request, and it may include Query String Parameters. When the content identifier is an URL, the HTTPS GET request may be or be based on that URL. For non-URL content identifiers, they may be included in the Query String Parameters of the HTTPS GET request. The server 500 receives the request and processes the content identifier(s) included in the request.

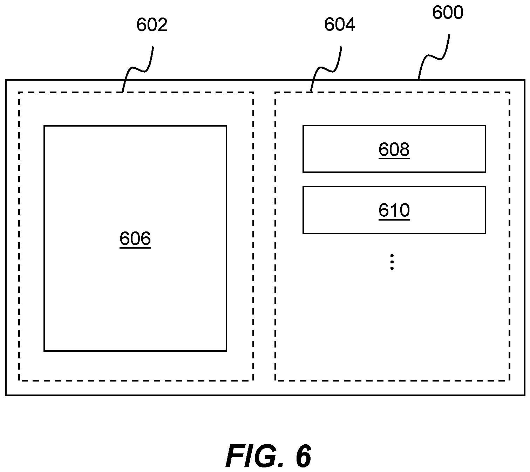

The content identifier(s) correspond to content or data accessible to the server. The server may store the content in its own memory or in an external memory accessible to the server. For example, a content identifier may correspond to an identifier of a digital workspace, a record, or any other type of data accessible to the server. The content identifiers may comprise links or URLs pointing to resources (i.e. content) associated with or hosted by the server, or to external resources not associated with the server. For URLs not associated with the server, the client 502 may exclude these from the request to be sent to the server, and cause a user interface to output the URL. This will be described in more detail in relation to FIG. 6. For URLs associated with the server, the client may construct the request using the URL and/or embed the URL within the request. The other aspects of the method(s), such as the use of the secure connection, user authentication, and cryptographic signature verification, allow for secure delivery and processing of URLs in this manner, and do not require the user to assess the trustworthiness of the URLs.

If the server is configured to store association(s) between the user 504 and the one or more content identifiers sent to the client 502, it may perform additional verification for the request. The server 500 may compare the user 504 of the secure connection and the at least one content identifier included in the request for content to the stored association(s). If the content identifier(s) of the request are found in stored associations related to the user, the server may determine that it has sent the user a corresponding message in the past, and the verification results in a pass. If no association between the user 504 and the content identifier(s) in the request is found, the server may determine that the request is likely fabricated by an impostor, as the server has no record of ever sending the user 504 a corresponding message. In this case, the verification results in a failure. The server may stop processing the request in the case of a failure, and continue processing in the case of a pass.

Using the content identifier(s) included in the request, the server 500 queries/retrieves content associated with the at least one content identifier from its one or more memories. The server sends the content to the client 502 using the established secure connection. The client then receives the content and presents it to the user 504 by causing a user interface to output 520 one or more content items based on the received content. The content items may correspond to the content as such, and/or the client may process the content to produce the content items. Such processed content items may be more suitable for presentation to the user. As described in relation to FIG. 1, the user interface may include e.g. a display or a touchscreen. The user interface may be configured to display the content items to the user.

Outputting the content items is now described in more detail with reference to FIG. 6, which depicts an example user interface (UI) 600, specifically a graphical user interface (GUI). The UI 600 may be the GUI of an email client. The UI comprises at least two separate sections; in the present example, these include a first section, which in the present example is an email client section 602, and a second section, which in the present example is a secure delivery add-in section 604. The first and second section are graphically separated from each other.

The email client section 602 is be configured to output standard content 606 typically output by email clients, such as received emails, sent emails, etc. The received emails correspond to messages received via (non-secure) connections other than the secure connection, and include the message that contains the content identifier(s) and the cryptographic signature - i.e. the notification email received from the server.

The secure delivery add-in section 604 is controlled by the secure delivery method and configured to output content delivered using the secure connection. For example, the section 604 may be configured to output a first content item 608 and a second content item 610 based on content received from the server that corresponds to the content identifier(s). The content may correspond to e.g. confidential messages received and/or sent by the user. The first content item 608 may contain a graphical representation of a first confidential message sent by the user, and the second content item 610 may contain a graphical representation of a second confidential message received by the user. Together, these content items may form a graphical representation of a conversation including the confidential messages e.g. in chronological order.

When the user interface 600 is configured to output the received message, outputting the one or more content items separately from the received message serves to help the user identify trusted, verified information obtained via the secure delivery method from less trustworthy information obtained via less secure delivery methods, such as standard email. By using the UI the user learns to be critical of information presented in the first section, and is able to trust information presented in the second section.

The second section may be further configured to output URLs, such as those included in the one or more content identifiers, and specifically those URLs that point to resources not associated with the server. While such URLs could be potentially unsafe if presented e.g. in a regular email, verification of the cryptographic signature included with such URLs indicates that they originated from the server, which the user trusts. Such an URL may thus be output alongside the other content items e.g. as a further content item. The user may then follow the URL to access additional content provided by it.

While the sections 602, 604 are shown side by side and the content items 608, 610 are stacked on top of one another in FIG. 6, this is only an example arrangement and the sections and content items may be arranged in other ways as well.

As an alternative to separating the first and second sections, the second section may be integrated with the first section e.g. such that the content items are effectively embedded in the message output to the user.

While the example UI is that of an email client and/or an email client add-in, the above approaches are also applicable to Uls used with clients and/or add-ins for other types of messages, such as text messages, multimedia messages, and instant messages.

The user interface comprised in or coupled to the apparatus (the user/client device) may include one or more input devices configured to receive user inputs. For example, these input devices may include one or more of the following: a touchscreen, a touchpad, a keyboard, a mouse, a button, a switch, etc. A user may interact with the received content using the input devices. For example, the user may click on a link displayed by the (second section of) the UI using a mouse. As another example, the user may type a response (using e.g. a keyboard) to the received content into an additional UI element configured to receive text and displayed in the (second section of) the UI. Thus, the user interface may be configured to receive one or more user inputs in response to the output one or more content items.

In general, the method of FIG. 3 may comprise receiving one or more user inputs, from the user interface, in response to the (output) one or more content items or otherwise. For example, the method may comprise causing the user interface to output one or more user interface elements configured to receive the one or more user inputs, e.g. as discussed above. The method may comprise causing the user interface to output the received one or more user inputs, such as the response typed by the user, e.g. as an additional UI element (in the second section of the UI). or in the UI element configured to receive the input. For example, the UI may display a typed response below the received content, providing a view of the conversation between the two (or more) users whose messages are displayed.

Referring again to FIG. 5, the client 502 may be configured to receive the one or more user inputs, such as the above-mentioned response typed by the user 504. The client 502 may send the received user input using the secure connection to the server 500. The server receives the user input and may store it in its one or more memories in the method of FIG. 4.

The user input may correspond to further content with the same or a different content identifier as the content previously presented to the user. For example, the server may assign the user input a new content identifier, or assign the user input the same content identifier that the content - to which the user input was received in response to - had. Receiving and/or storing the user input (i.e. content) may trigger performing the method of FIG. 4 (or any one of its embodiments) by the server for another user, e.g. due to notification configurations applicable to the another user and stored on the server. The user device of the another user may correspondingly perform the method of FIG. 3 (or any one of its embodiments). For example, if the user 504 replied to a message sent by another user, the server 500 may proceed to perform the secure delivery method with the another user using the reply as the content to be delivered.

Referring now to FIG. 1, the user who received the original content and provided the user input may be the first user 24, and the another user may be the second user 26. The user inputs provide a way of adding to, or amending the content stored on the server. The server and user/client device(s) may repeatedly perform the methods of FIG. 3 and 4 with the user devices providing new user inputs, thus adding to the content stored on the server. As discussed above, the server may assign the same content identifier to the new content from the user input(s), or assign different or new content identifiers for the new content. In the first case, the server may correspondingly send the same content identifier in new messages sent to user devices. In the second case, the server may send the different content identifier(s), and optionally also the same content identifier that was previously used, in new messages sent to user devices. When additional content is added to the same content identifier or new, different content identifier(s) are provided to the user device in addition to the same, old content identifier, the user device may provide the user the enhanced or updated content, while also including earlier content. For example, the user device may display content items corresponding to confidential messages sent between the user and another user as a conversation, as discussed in relation to FIG. 6 above.

Some examples of alternative headers and content identifiers for the messages generated by the server are discussed below. In general, including the content identifier(s) and the cryptographic signature in the header of a message may conceal the identifiers and the signature from the user, since e.g. many e-mail clients do not display the content of the headers by default, or at all. Further, should the user choose to forward the message or to "Reply all" to the original message, the header of the original message is typically not included in the forwarded message or the reply, but the body of the message is. Unnecessary sharing of the content identifier(s) and the signature is thus avoided when they are included in the header instead of the body of the message.

In a first example shown below, the header comprises a content identifier (10394772) in unencrypted form. In this case, the header is an email header and the content identifier is provided under X-Greip-SDM-Key.
Date: Fri, 24 Jan 2025 09:36:29 +0000
From: Greip Notifications <noreply@greip.fi>
To: firstname.lastname@greip.com
Message-ID: xxxx
Subject: New secure notification from Greip
X-Greip-SDM-Key: 10394772

As described above, the content identifier corresponds to content or data accessible to the server. For example, it may correspond to an identifier of a digital workspace, a record, or any other type of data accessible to the server. By keeping track of the content identifier(s) sent to a particular user, the server may verify requests for content in the manner discussed above in relation to FIG. 5 to ensure that only the intended recipient is able to access the content.

In a second example shown below, the header comprises a content identifier (10394772) in unencrypted form, as well as a cryptographic signature (de42a45f34e24a2524ae4125f252ee). These are both provided under X-Greip-SDM-Key and separated by a dash. Similarly to the first example, the header is an email header.
Date: Fri, 24 Jan 2025 09:36:29 +0000
From: Greip Notifications <noreply@greip.fi>
To: firstname.lastname@greip.com
Message-ID: xxxx
Subject: New secure notification from Greip
X-Greip-SDM-Key: 10394772-de42a45f34e24a2524ae4125f252ee

The cryptographic signature allows for verifying the authenticity of the message and thus also the key or content identifier by the client. The client is thus able to distinguish fraudulent notification messages from genuine ones.

In a third example shown below, the header comprises a cryptographic signature (xzj28hfs8bzxjm9hf8312fjzfhakhsjf91 hfzkjhn1 88hfsdanf8h1 8h8dxjv8hhr8vz7hqaksw hj4k9) that includes the content identifier (10394772) in encrypted form. Similarly to the above example, the header is an email header and the cryptographic signature containing the content identifier is provided under X-Greip-SDM-Key.
Date: Fri, 24 Jan 2025 09:36:29 +0000
From: Greip Notifications <noreply@greip.fi>
To: firstname.lastname@greip.com
Message-ID: xxxx
Subject: New secure notification from Greip
X-Greip-SDM-Key:
   xzj28hfs8bzxjm9hf8312fjzfhakhsjf91hfzkjhn188hfsdanf8h18h8dxjv8hhr8vz7h qakswhj4k9

The encryption hides the content identifier from possible observers of the message, and thus allows for including confidential information or links in the content identifier. For example, the content identifier may include an URL (https://...) that points directly to the content to be requested from the server or elsewhere. Hiding such URLs from the user makes the message appear more trustworthy and allows for processing the URLs by the client without user involvement. The encryption may also replace verifying content requests by the server, as only the intended recipient should be able to decrypt the signature and thus access the content identifier. This reduces the processing and memory load at the server. However, both encryption of the content identifier and verifying content requests by the server may be used in combination for increased security. In a further example, the entire header may be encrypted.

While the above shows examples of email headers, the above approaches are also applicable to the headers or equivalent parts of other types of messages, such as text messages, multimedia messages, and instant messages.

If desired, the different functions discussed herein may be performed in a different order and/or concurrently with other. Furthermore, if desired, one or more of the above-described functions and embodiments may be optional or may be combined.

Although various aspects of the embodiments are set out in the independent claims, other aspects comprise other combinations of features from the described embodiments and/or the dependent claims with the features of the independent claims, and not solely the combinations explicitly set out in the claims.

It is also noted herein that while the above describes example embodiments, these descriptions should not be viewed in a limiting sense. Rather, there are several variations and modifications, which may be made without departing from the scope of the present disclosure as defined in the appended claims.

## Claims

1. A computer-implemented method comprising:
establishing a secure connection to a server, wherein establishing the secure connection is dependent on authentication of a user;
receiving a message transmitted via at least one further connection different from the secure connection, the message comprising one or more content identifiers and a cryptographic signature;
verifying the cryptographic signature to confirm that the message originated from the server;
sending, using the secure connection, a request for content to the server, the request comprising at least one of the one or more content identifiers;
receiving, using the secure connection, content corresponding to the at least one content identifier from the server; and
causing a user interface to output one or more content items based on the received content.

2. The method of claim 1, wherein verifying the cryptographic signature is dependent on the authentication of the user.

3. The method of claim 1 or 2, wherein the one or more content identifiers comprise at least one universal resource locator, URL, pointing to a resource not associated with the server, and wherein the method comprises:
excluding the at least one URL from the request for content; and
causing the user interface to output the at least one URL.

4. The method of any one of claims 1 to 3, wherein the user interface is configured to output the received message, and wherein the method comprises:
causing the user interface to output the one or more content items separately from the received message.

5. A computer-implemented method comprising:
establishing a secure connection to a client device, wherein establishing the secure connection is dependent on authentication of a user at the client device;
generating a message comprising one or more content identifiers and a cryptographic signature;
sending the message to the client device using at least one further connection different from the secure connection;
receiving, using the secure connection, a request for content from the client device, the request comprising at least one of the one or more content identifiers;
retrieving content associated with the at least one content identifier from one or more memories; and
sending the content to the client device using the secure connection.

6. The method of claim 5, wherein the method comprises:
storing, in the one or more memories, an association between the user and the one or more content identifiers sent to the client device; and
verifying the request for content by comparing the user of the secure connection and the at least one content identifier in the request for content to the stored association.

7. The method of claim 5 or 6, wherein message comprises a body, and wherein the method comprises:
generating the message such that the body of the message is devoid of uniform resource locators, URLs.

8. The method of claim 7, wherein the method comprises:
querying the one or more memories for configurations associated with the user;
if one or more configurations associated with the user are found and indicate that:
the user has a known ability to establish the secure connection, and/or
a URL exclusion override is applicable to the user,
generating the message such that the body of the message is devoid of URLs; or otherwise, allowing URLs in the body of the message.

9. The method of any one of claims 5 to 8, wherein the method comprises:
in response to establishing the secure connection, storing, in the one or more memories, a configuration which indicates that the user has a known ability to establish the secure connection.

10. The method of any one of claims 1 to 9, wherein the cryptographic signature comprises the one or more content identifiers in encrypted form.

11. The method of any one of claims 1 to 10, wherein the message is an email, a text message, a multimedia message, or an instant message.

12. The method of any one of claims 1 to 13, wherein the message comprises one or more headers, and wherein the one or more content identifiers and the cryptographic signature are included in the one or more headers of the message.

13. The method of any one of claims 1 to 12, wherein the one or more content identifiers comprise one or more uniform resource locators, URLs, pointing to one or more resources associated with the server.

14. An apparatus comprising one or more processors, one or more memories including computer program code, the one or more memories and the computer program code configured to, with the one or more processors, cause the apparatus to perform the method of any one of claims 1 to 13.

15. A computer program product comprising computer program code configured to, when executed by one or more processors, cause an apparatus to perform the method of any one of claims 1 to 13.
